# EUROPEAN PATENT APPLICATION

(11) **EP 3 210 818 A1**
(43) Date of publication of application: **30.08.2017**
(21) Application number: 17156465.1
(22) Date of filing: 16.02.2017
(51) Int. Cl.: B60L 13/04, B60L 13/10, B60C 11/00, B60C 99/00

(54) **SUPPORT ASSEMBLY FOR A VEHICLE COMPRISING MAGNETICALLY COUPLED SPHERICAL TIRES**

(30) Priority: 24.02.2016 US 201662299165 P
(71) Applicant: The Goodyear Tire & Rubber Company, Akron, OH 44316 (US)
(72) Inventor: FONTAINE, Sebastien Willy, L-9188 Vichten (LU); LECONTE, Armand René Gabriel, L-8814 Bigonville (LU); NGO, Frederic, L-7390 Blaschette (LU); BOES, Claude Ernest Felix, L-9147 Erpeldange-sur-Sûre (LU)
(74) Representative: Kutsch, Bernd

(57) **Abstract**

A support assembly for a vehicle (901) is disclosed. The assembly (1000) comprises at least two spherical tires (1010) for travelling on a road surface and configured for rotating relative to the road surface and the vehicle (901), and a drive system (1100) configured for magnetically driving rotation of the spherical tires (1010) relative to the drive system (1100) itself such that no portion of the drive system (1100) physically contacts the spherical tires (1010) or the road surface.

## Description

### Field of Invention

The present invention relates to transportation, and, more particularly, to an assembly for supporting a vehicle while traversing a ground or other surface.

### Background of the Present Invention

A conventional device may include a spherical housing and an internal drive system including one or more motors coupled to one or more wheels engaged to an inner surface of the spherical housing. A biasing mechanism, including a spring and contact end, may be coupled to the internal drive system to provide diametrically opposing force between the wheels and contact end to allow for power to the motors to be transferred to the inner surface of the spherical housing, causing the self-propelled device to roll along a contact surface. The self-propelled device may rotate based on a combination of movement of its center of mass, independent power to the motors, and the force of the biasing mechanism against the inner surface. A magnetic coupling component may be included with the biasing mechanism. The magnetic coupling component may comprise ferrous metal or a permanent magnet, such as a neodymium magnet, to provide a magnetic field through the spherical housing to magnetically interact with external devices and/or accessories.

### Summary of the Invention

The invention relates to a support assembly in accordance with claim 1.

Dependent claims refer to preferred embodiments of the invention.

A support assembly for a vehicle in accordance with a preferred aspect of the present invention includes at least two spherical tires travelling on a road surface and rotating relative to the road surface and the vehicle and a drive system magnetically driving rotation of the tires relative to the drive system itself such that no portion of the drive system physically contacts the tires or the road surface.

According to another preferred aspect of the assembly, the drive system magnetically levitates the vehicle a first predetermined distance from the tires.

According to still another preferred aspect of the assembly, the drive system magnetically levitates itself a second predetermined distance from an inner surface of the tires.

According to yet another preferred aspect of the assembly, the tires are closed spheres having an interior space completely separate from external environment.

According to still another preferred aspect of the assembly, the drive system comprises a first magnetically passive part and a second magnetically active part.

According to yet another preferred aspect of the assembly, the first part generates only a constant magnetic field.

According to still another preferred aspect of the assembly, the second part generates a constant magnetic field and a variable magnetic field.

According to yet another preferred aspect of the assembly, the drive system maintains the vehicle at a substantially constant orientation relative to the drive system.

According to still another preferred aspect of the assembly, the tires include a plurality off layers.

According to yet another preferred aspect of the assembly, one of the plurality of layers mechanically supports a portion of a load determined by the vehicle.

According to still another preferred aspect of the assembly, one of the plurality of layers comprises a tread for generating traction between the tires and the road surface.

According to yet another preferred aspect of the assembly, one of the plurality of layers comprises an elastomeric layer for damping vibration caused by the tires traveling over the road surface.

### Brief Description of the Drawings

The disclosure herein is described by way of example, and not by way of limitation, in the figures of the a1ccompanying drawings and in which like reference numerals refer to similar elements, and in which:
FIG. 1 schematically illustrates an assembly in accordance with the present invention;
FIG. 2 is an example block diagram illustrating a conventional system to control operation of a self-propelled device;
FIG. 3 is a schematic depiction of a conventional self-propelled device under control of a controller;
FIG. 4 schematically illustrates an example of a conventional self-propelled device;
FIG. 5 illustrates another example of a conventional self-propelled device; and
FIG. 6 is an example block diagram for a computer system and the self-propelled device of FIGS. 4 and 5.

### Detailed Description of Example Embodiments of the Present Invention

An example conventional device, such as that described in US-B-9,090,214 and US-B-9,211,920, incorporated by reference in their entirety herein, include a spherical housing and an internal drive system including one or more motors coupled to one or more wheels engaged to an inner surface of the spherical housing. A biasing mechanism, including a spring and contact end, is coupled to the internal drive system to provide diametrically opposing force between the wheels and contact end to allow for power to the motors to be transferred to the inner surface of the spherical housing, causing the self-propelled device to roll along a contact surface. The self-propelled device rotates based on a combination of movement of its center of mass, independent power to the motors, and the force of the biasing mechanism against the inner surface. A magnetic coupling component may be included with the biasing mechanism. The magnetic coupling component may comprise ferrous metal or a permanent magnet, such as a neodymium magnet, to provide a magnetic field through the spherical housing to magnetically interact with external devices and/or accessories.

An example external accessory for the device includes a magnetic coupling component to magnetically couple with the magnetic coupling component of the biasing mechanism (e.g., the contact end). Accordingly, when the spherical housing of the self-propelled device is caused to roll, the external accessory can remain stably coupled to the contact end of the biasing mechanism via magnetic interaction through the spherical housing.

Either the self-propelled device, the external accessory, or both, may include a magnet (e.g., a neodymium magnet) to produce the magnetic field causing the magnetic interaction. Such interaction may involve a magnetic attraction in which contact occurs between the external accessory and the outer surface of the spherical housing. In such examples, friction may be reduced by coating the outer surface of the spherical housing and/or a contact surface of the external accessory with a substantially frictionless material. Additionally or alternatively, the magnetic interaction may involve a repulsive force including stability mechanism (e.g., one or more further magnets) to create stable magnetic levitation between the external accessory and the spherical housing.

As used herein, "substantially" means between 0° and less than 90° in the context of an angular rotation of the biasing mechanism while the self-propelled device is under operational control. Accordingly, a "substantially" stable, a "substantially" constant angle, or a "substantial" perpendicularity between the biasing mechanism (or spring component) and an external surface on which the self-propelled device rolls, means less than 90° with respect to that surface, and typically less than 45° while the self-propelled device is in a non-accelerated state. As further used herein, "substantially" in the context of friction between the outer surface of the spherical housing and the contact surface of the external accessory device, means a below normal frictional relation between two typical smooth surfaces (e.g., polished metal or wood surfaces). Thus, a "substantially" frictionless material means a material designed or manufactured for reduced friction.

One or more conventional examples described herein provide that methods, techniques, and actions performed by a computing device may be performed programmatically, or as a computer-implemented method. Programmatically, as used herein, means through the use of code or computer-executable instructions. These instructions may be stored in one or more memory resources of the computing device. A programmatically performed step may or may not be automatic.

One or more conventional examples described herein may be implemented using programmatic modules or components of a system. A programmatic module or component may include a program, a sub-routine, a portion of a program, a software component, and/or a hardware component capable of performing one or more stated tasks or functions. As used herein, a module or component may exist on a hardware component independently of other modules or components. Alternatively, a module or component may be a shared element or process of other modules, programs, and/or machines.

Some examples described herein may generally require the use of computing devices, including processing and memory resources. For example, one or more examples described herein may be implemented, in whole or in part, on computing devices such as digital cameras, digital camcorders, desktop computers, cellular/smart phones, personal digital assistants (PDAs), laptop computers, printers, digital picture frames, and/or tablet devices. Memory, processing, and network resources may all be used in connection with the establishment, use, and/or performance of any example described herein (including with the performance of any method and/or with the implementation of any system).

Furthermore, one or more examples described herein may be implemented through the use of instructions that are executable by one or more processors. These instructions may be carried on a computer-readable medium. Machines shown or described with figures below provide examples of processing resources and computer-readable mediums on which instructions for implementing examples may be carried and/or executed. In particular, the numerous machines shown with examples may include processors and various forms of memory for holding data and instructions. Examples of computer-readable mediums may include permanent memory storage devices, such as hard drives on personal computers or servers. Other examples of computer storage mediums may include portable storage units, such as CD or DVD units, flash memory (such as carried on smart phones, multifunctional devices, and/or tablets), and magnetic memory. Computers, terminals, network enabled devices (e.g., mobile devices, such as cell phones) may all utilize processors, memory, and/or instructions stored on computer-readable mediums. Additionally, examples may be implemented in the form of computer-programs, or a non-transitory computer usable carrier medium capable of carrying such a program.

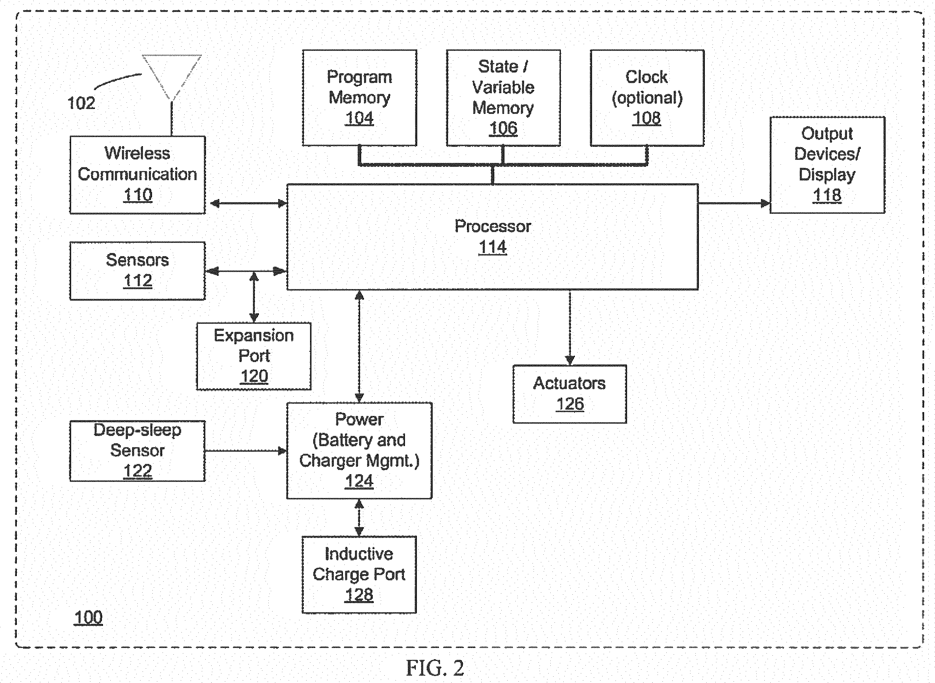

Referring now to FIG. 2, a schematic depiction of an example self-propelled device 100 is shown. The self-propelled device 100 may move under control of another device, such as a computing device operated by a user. The self-propelled device 100 may be configured with resources that enable one or more of the following: maintain self-awareness of orientation and/or position relative to an initial reference frame after the device initiates movement; process control input programmatically, so as to enable a diverse range of program-specific responses to different control inputs; enable another device to control its movement using software or programming logic that is communicative with programming logic on the self-propelled device; and/or generate an output response for its movement and state that it is software interpretable by the control device.

The self-propelled device 100 may include several interconnected subsystems and modules. A processor 114 may execute programmatic instructions from a program memory 104. The instructions stored in the program memory 104 may be changed, for example to add features, correct flaws, and/or modify device behavior. The program memory 104 may store programming instructions that are communicative or otherwise operable with software on a linked controller device. The processor 114 may execute different sets of programming instructions in order to alter the manner in which the self-propelled device 100 interprets or otherwise responds to control inputs from the linked controller.

A wireless communication port 110, in conjunction with a communication transducer 102, may exchange data between the processor 114 and other external devices. The data exchanges, for example, may provide communications, control, logical instructions, state information, and/or updates for the program memory 104. The processor 114 may generate output corresponding to state and/or position information, communicated to the linked controller via the wireless communication port 110. The mobility of the self-propelled device 100 may limit hard-wired connections. Thus, the term "connection" may be understood to mean a logical connection, such as a wireless link made without a physical connection to the self-propelled device 100.

The wireless communication port 110 may implement the communication protocol and the transducer 102 may be an antenna suitable for transmission and reception of radio signals. Other wireless communication mediums and protocols may also be used in alternative implementations. Sensors 112 may transmit information about the surrounding environment and condition to the processor 114. The sensors 112 may include inertial measurement devices, including a three-axis gyroscope, a three-axis accelerometer, and/or a three-axis magnetometer. The sensors 114 may provide input to enable the processor 114 to maintain awareness of the device's orientation and/or position relative to an initial reference frame after the device 100 initiates movement. Also, the sensors 112 may include instruments for detecting light, temperature, humidity, and/or measuring chemical concentrations or radioactivity.

A state/variable memory 106 may store information about the present state of the system, including, for example, position, orientation, rates of rotation, and/or translation about each axis. The state/variable memory 106 may also store information corresponding to an initial reference frame of the device 100 upon, for example, the device being put in use (e.g., the device being switched on), as well as position and orientation information once the device is in use. Thus, the device 100 may utilize information of the state/variable memory 106 in order to maintain position and orientation information of the device once the device moves.

A clock 108 may provide timing information to the processor 114 by implementing a time-base for measuring intervals and rates of change. The clock 108 may provide day, date, year, time, and/or alarm functions. The clock 108 may allow the self-propelled device 100 to sound an alarm or alert at pre-set times.

An expansion port 120 may provide a connection for addition of accessories or devices. The expansion port 120 may provide for future expansion, as well as flexibility to add options or enhancements. For example, the expansion port 120 may be used to add peripherals, sensors, processing hardware, storage, displays, or actuators to the basic self-propelled device 100.

In variations, the expansion port 120 may provide an interface capable of communicating with a suitably configured component using analog or digital signals. Thus, the expansion port 120 may provide electrical interfaces and protocols that are standard or well-known. Furthermore, the expansion port 120 may implement an optical interface. Example interfaces appropriate for the expansion port 120 may include the universal serial bus (USB), inter-integrated circuit bus (12C), serial peripheral interface (SPI), and/or ethernet.

A display 118 may be included to present information to outside devices or users. The display 118 may present information in a variety of forms. In variations, display 118 may produce light in colors and patterns, sound, vibration, music, and/or combinations of sensory stimuli. The display 118 may operate in conjunction with actuators 126 to communicate information from physical movements of device 100. For example, the device 100 may be made to emulate a human head, nod and/or shake to communicate "yes" or "no."

In variations, the display 118 may be an emitter of light, either in the visible or invisible range. Invisible light in the infrared or ultraviolet range may be useful, for example, to send information invisible to human senses, but available to specialized detectors. In some examples, the display 118 may include an array of light emitting diodes (LEDs) emitting various light frequencies and arranged such that their relative intensity is variable and the light emitted is blended to form color mixtures.

The display 118 may include an LED array comprising several LEDs, each emitting a human-visible primary color. The processor 114 may vary the relative intensity of each of the LEDs to produce a wide range of colors. Primary colors of light are those in which a few colors may be blended in different amounts to produce a wide gamut of apparent colors. Many sets of primary colors are known, including, for example, red/green/blue, red/green/blue/white, and red/green/blue/amber. For example, red, green and blue LEDs together may define a usable set of three available primary-color devices comprising the display 118. In other examples, other sets of primary colors and white LEDs may be used. The display 118 may further include an LED used to indicate a reference point on the device 100 for alignment.

A power cell 124 may store energy for operating the electronics and electromechanical components of the device 100. The power cell 124 may be a rechargeable battery. Furthermore, an inductive charge port 128 may allow for recharging the power cell 124 without a wired electrical connection. In variations, the inductive charge port 128 may accept magnetic energy and convert it to electrical energy to recharge the power cell 124. The charge port 128 may also provide a wireless communication interface with an external charging device.

A deep sleep sensor 122 may be included to place the self-propelled device 100 into a very low power or "deep sleep" mode where most of the electronic devices use no battery power. This may be useful for long-term storage or shipping. In variations, the deep sleep sensor 122 may be non-contact in that it senses through the housing of the device 100 without a wired connection. The deep sleep sensor 122 may be a Hall-effect sensor mounted so that an external magnet may be applied at a pre-determined location on the device 100 to activate a deep sleep mode.

Drive actuators 126 may be included to convert electrical energy into mechanical energy for various uses. A primary use of the drive actuators 126 may be to propel and steer the self-propelled device 100. Movement and steering actuators may also be referred to as a drive system or traction system. The drive system may move the device 100 in rotation and translation, under control of the processor 114. Examples of drive actuators 126 may include, without limitation, wheels, motors, solenoids, propellers, paddle wheels, and/or pendulums. The drive actuators 126 may include two parallel wheels, each mounted to an axle connected to an independently variable-speed motor through a reduction gear system. Thus, the speeds of the two drive motors may be controlled by the processor 114.

The drive actuators 126 may produce a variety of movements in addition to merely rotating and translating the self-propelled device 100. Thus, in some variations, the drive actuators 126 may allow the device 100 to execute communicative or emotionally evocative movements, including emulation of human gestures, for example, head nodding, shaking, trembling, spinning, and/or flipping. In some variations, the processor 114 may coordinate the drive actuators 126 with the display 118. For example, the processor 114 may provide signals to the drive actuators 126 and the display 118 to cause the device 100 to spin or tremble and simultaneously emit patterns of colored light. Thus, the device 100 may emit light and/or sound patterns synchronized with movements.

In further variations, the self-propelled device 100 may be used as a controller for other network-connected devices. The device 100 may contain sensors and wireless communication capability, and so it can perform a controller role for other devices. For example, the self-propelled device 100 may be held in the hand and used to sense gestures, movements, rotations, combination inputs, etc.

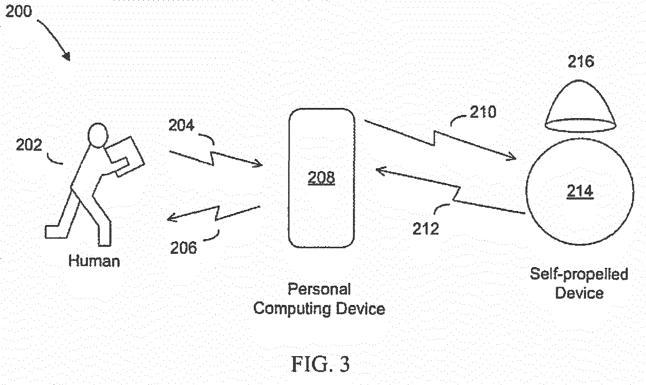

FIG. 3 is an example conventional schematic depiction of a self-propelled device 214 under control of a controller device 208, such as a smart phone or tablet computing device. More specifically, the self-propelled device 214 may be controlled in its movement by programming logic and/or controls that can originate from the controller device 208. The self-propelled device 214 may move under control of the computing device 208, which can be operated by a user 202. The computing device 208 may wirelessly communicate control data 204 to the self-propelled device 214 using a standard or proprietary wireless communication protocol. In variations, the self-propelled device 214 may be at least partially self-controlled, utilizing sensors and internal programming logic to control the parameters of its movement (e.g., velocity, direction, etc.). Still further, the self-propelled device 214 may communicate data relating to the device's position and/or movement parameters for the purpose of generating or alternating content on the computing device 208. The self-propelled device 214 may control aspects of the computing device 208 by way of its movements and/or internal programming logic. The self-propelled device 214 may have multiple modes of operation, including those of operation in which the device is controlled by the computing device 208, is a controller for another device (e.g., another self-propelled device or the computing device 208), and/or is partially or wholly self-autonomous.

The self-propelled device 214 and the computing device 208 may share a computing platform on which programming logic is shared in order to enable the user 202 to operate the computing device 208 and generate multiple kinds of input, including simple directional input, command input, gesture input, motion and/or other sensory input, voice input, or combinations thereof, enable the self-propelled device 214 to interpret input received from the computing device 208 as a command or set of commands, and/or enable the self-propelled device 214 to communicate data regarding that device's position, movement, and/or state in order to effect a state on the computing device 208 (e.g., display state, such as content corresponding to a controller-user interface). The self-propelled device 214 may include a programmatic interface that facilitates additional programming logic and/or instructions for using the device. The computing device 208 may execute programming that is communicative with the programming logic on the self-propelled device 214.

According to some examples, the self-propelled device 214 includes an actuator or drive mechanism causing motion or directional movement. The self-propelled device 214 may be referred to by a number of related terms and phrases, including controlled device, robot, robotic device, remote device, autonomous device, and remote-controlled device. The self-propelled device 214 may be structured to move and be controlled in various media. For example, the self-propelled device 214 may move through media such as flat surfaces, sandy surfaces, and/or rocky surfaces.

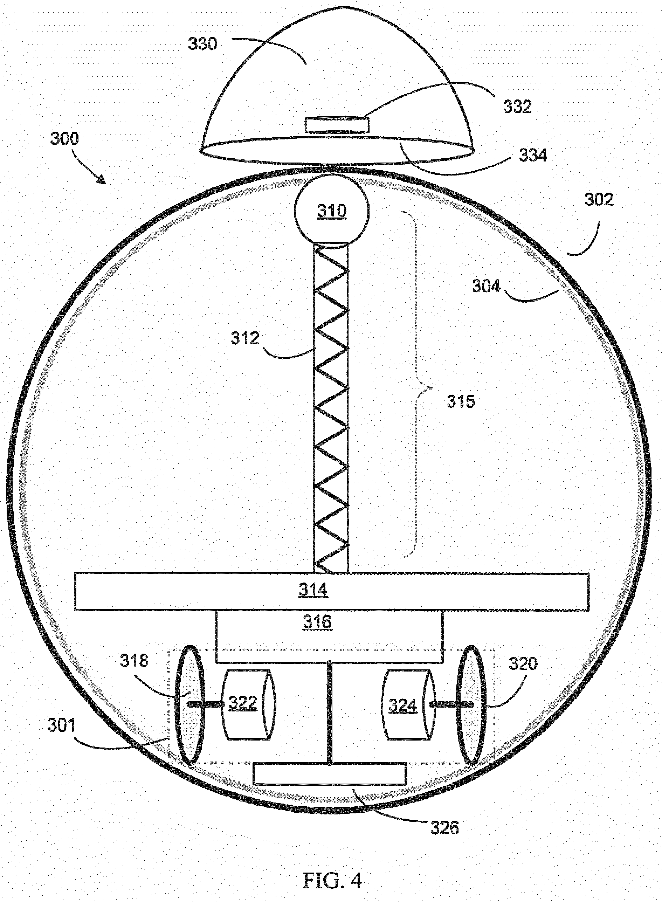

As shown in FIG. 4, the self-propelled device 214 may correspond to a spherical object that can roll and/or perform other movements such as spinning. The self-propelled device 214 may include an external accessory 216 magnetically coupled to the self-propelled device 214 via magnetic coupling through the spherical housing of the device. The self-propelled device 214 may correspond to a radio-controlled aircraft, such as an airplane, helicopter, hovercraft, and/or balloon. The device 214 may correspond to a radio controlled watercraft, such as a boat or submarine. Numerous other variations may also be implemented, such as those in which the device 214 is a robot.

The self-propelled device 214 may include a sealed hollow envelope, substantially spherical in shape, capable of directional movement by action of actuators inside the envelope. The self-propelled device 214 may communicate with the computing device 208 using network communication links 210, 212. One link 210 may transfer data from the computing device 208 to self-propelled device 214. The other link 212 may transfer data from the self-propelled device 214 to the computing device 208. The links 210, 212 may be separate unidirectional links or a single bidirectional communication link communicating in both directions. The links 210, 212 may not be identical in type, bandwidth, and/or capability. For example, the link 210 from the computing device 208 to the self-propelled device 214 may be capable of a higher communication rate and bandwidth compared to the link 212. In some situations, only one link 210 or 212 may be established. Communication may then be unidirectional.

The computing device 208 may correspond to any device comprising at least a processor and communication capability suitable for establishing at least unidirectional communications with the self-propelled device 214. Examples of such devices may include, without limitation mobile computing devices (e.g., multifunctional messaging/voice communication devices such as smart phones), tablet computers, portable communication devices, and/or personal computers.

The user 202 may interact with the self-propelled device 214 via the computing device 208 in order to control the self-propelled device 214 and/or to receive feedback or interaction on the computing device 208 from the self-propelled device 214. As such, the user 202 may specify input 204 through various mechanisms of the computing device 208. Examples of such inputs may include text entry, voice command, touching a sensing surface or screen, physical manipulations, gestures, taps, shaking, and combinations thereof.

The user 202 may interact with the computing device 208 in order to receive feedback 206. The feedback 206 may be generated by the computing device 208 in response to user input. The feedback 206 may also be based on data communicated from the self-propelled device 214 to the computing device 208, regarding, for example, the self-propelled device's position or state. Examples of feedback 206 may include text display, graphical display, sound, music, tonal patterns, modulation of color or intensity of light, haptic, vibrational, and/or tactile stimulation. The feedback 206 may be combined with input that is generated on the computing device 208. The computing device 208 may thereby output content that is modified to reflect position or state information communicated from the self-propelled device 214.

The computing device 208 and/or the self-propelled device 214 may thus be configured such that user input 204 and feedback 206 maximize usability and accessibility for the user 202, who may have limited sensing, thinking, perception, motor, and/or other abilities. This allows a user 202 with handicaps or special needs to operate the system 200.

FIG. 4 schematically shows another conventional example of a self-propelled device 300. The self-propelled device 300 may be of a size and weight allowing it to be easily grasped, lifted, and/or carried in an adult human hand. The self-propelled device 300 may include a spherical housing 302 with an outer surface that makes contact with an external surface as the device moves by rolling. The spherical housing 302 include an inner surface 304 and several mechanical and electronic components enclosed by the inner surface of the spherical housing.

The spherical housing 302 may be composed of a material that transmits signals used for wireless communication, yet are impervious to moisture and dirt. The spherical housing 302 may further be durable, washable, and/or shatter-resistant. The spherical housing 302 may also be structured to enable transmission of light and textured to diffuse the light. The spherical housing 302 may be a sealed polycarbonate plastic. The spherical housing 302 may comprise two hemispherical shells with an associated attachment mechanism, such that the spherical housing may be opened to allow access to internal electronic and mechanical components.

Several electronic and mechanical components may be located inside the spherical housing 302 for processing, wireless communication, propulsion, and/or other functions (collectively referred to as an "interior mechanism"). Among the components, examples may include a drive system 301 enabling the device 300 to propel itself. The drive system 301 may be coupled to processing resources and other control mechanisms. A carrier 314 serves as an attachment point and support for components of the drive system 301. The components of the drive system 301 may not be rigidly attached to the spherical housing 302. Instead, the drive system 301 may include a pair of rollers 318, 320 that are in frictional contact with the inner surface 304 of the spherical housing 302.

The carrier 314 may be in mechanical and/or electrical contact with an energy storage component 316. The energy storage component 316 may provide a reservoir of energy to power the device 300 and its associated electronic components. The energy storage component 316 may be replenished through an inductive charge port 326. The energy storage component 316 may be a rechargeable battery. Such a battery may comprise lithium-polymer cells. Other suitable rechargeable battery chemistries/mechanisms may also be used. The carrier 314 may provide a mounting location for most of the internal components, including printed circuit boards for electronic assemblies, sensor arrays, antennas, and connectors, as well as providing a mechanical attachment point for internal components.

The drive system 301 may include motors 322, 324 and wheels 318, 320. The motors 322, 324 may connect to the wheels 318, 320, respectively, each through an associated shaft, axle, and gear drive (not shown). The perimeter of wheels 318, 320 may mechanically contact the inner surface 304 at essentially two points. These points may provide the drive mechanism of the spherical housing 302, or ball, and may be coated with a material to increase friction and reduce slippage between the wheels 318, 320 and the inner surface 304. For example, the wheels 318, 320 may include silicone rubber tires.

A biasing mechanism 315 may actively force the wheels 318, 320 against the inner surface 304. A spring 312 and a spring end 310 may comprise the biasing mechanism 315. More specifically, the spring 312 and the spring end 310 may be positioned to contact the inner surface 304 at a point diametrically opposed to the wheels 318, 320. The spring 312 and the spring end 310 may provide additional contact force to reduce slippage of the wheels 318, 320, particularly in situations where the interior mechanism is not positioned with the wheels at the bottom and where gravity does not provide adequate force to prevent the drive wheels 318, 320 from slipping. The spring 312 may provide a force to press the wheels 318, 320 and the spring end 310 against the inner surface 304.

The spring end 310 may provide near-frictionless contact with the inner surface 304. The spring end 310 may be a rounded surface configured to mirror a low-friction contact region at all contact points with the inner surface 304. The rounded surface may include one or more bearings to further reduce friction at the contact point where spring end 310 moves along inner surface 304. The spring 312 and the spring end 310 may be made of a non-magnetic material to avoid interference with sensitive magnetic sensors. However, the spring end 310 may include one or more magnetic components to magnetically couple to an external accessory device 330.

The spring 312 may have a spring constant such that the wheels 318, 320 and the spring end 310 may be constantly engaged to the inner surface 304 of the spherical housing 302. As such, much of the power from the motors 322, 324 may be transferred directly to rotating the spherical housing 302, as opposed to causing the internal components (e.g., the biasing mechanism 315 and internal drive system 301) to slant or pitch. Thus, while motion of the self-propelled device 300 may be caused, at least partially, by pitching the internal components (and therefore the center of mass of the device), motion may also be directly caused by active force of the wheels 318, 320 against the inner surface 304 of the spherical housing 302 (via the biasing mechanism 315) and direct transfer of electrical power from the motors 322, 324 to the wheels 318, 320. The pitch of the biasing mechanism 315 may be substantially reduced, and remain substantially constant (e.g., substantially perpendicular to the external surface on which the self-propelled device 300 moves). The pitch of the biasing mechanism 315 may increase (e.g., to over 45 degrees) during periods of hard acceleration or deceleration. Furthermore, under normal operating conditions, the pitch of the biasing mechanism 315 may remain stable or subtly vary (e.g., within 10° to 15°).

The spring end 310 may be formed of a magnetic metal attracted to a magnet. Such metals may include iron, nickel, cobalt, gadolinium, neodymium, samarium, and/or other metal alloys containing proportions of these metals. Alternatively, the spring end 310 may include a substantially frictionless contact portion, in contact with the inner surface 304 of the spherical housing 302, and a magnetically interactive portion, in contact or non-contact with the inner surface 304, including the above metals or metal alloys. The substantially frictionless contact portion can be comprised of an organic polymer such as a thermoplastic or thermosetting polymer.

Alternatively, the spring end 310 may a magnet, such as a polished neodymium permanent magnet. The spring end 310 may produce a magnetic field extending beyond the outer surface of the spherical housing 302 to magnetically couple with the external accessory device 330. Also, the spring end 310 may be comprised of a substantially frictionless contact portion and have a magnet included therein.

The magnetic component of the self-propelled device 300 may be included on any internal component, such as the spring 312 or the carrier 314, or an additional component coupled to the biasing mechanism 315 or the carrier. The external accessory device 330 may include a magnetic component 332 to magnetically couple with the biasing mechanism 315 (e.g., the spring end 310). The magnetic component 332 may comprise a permanent magnet, such as a neodymium magnet. The magnetic component 332 may magnetically couple to the spring end 310. As such, the magnetic field produced by the magnetic component 332 may extend through the spherical housing 302 to remain in magnetic contact with the spring end 310. The magnetic component 332 of the external accessory device 330 may comprise a magnetic metal attracted to a magnet comprising the spring end 310.

One or more of the spring ends 310 and the magnetic components may be comprised of any number of electro and/or permanent magnets. Such magnets may be irregular in shape to provide added magnetic stability upon motion of the self-propelled device 300. The magnetic component 332 of the external accessory device 330 may be a single magnetic strip or multiple magnetic strips including one or more tributary strips to couple with a single or multiple correspondingly shaped magnets on the spring end 310. Multiple magnets may be dispersed through the external accessory device 330 and the spring end 310 to provide additional stability.

The spring end 310 and external accessory device 330 may be in a stable magnetically repulsive state as the self-propelled device 300 moves. Either the magnetic component 332 or the spring end 310 may further include a superconductor material to substantially eliminate dynamic instability of a repelling magnetic force and allow stable magnetic levitation of the external accessory device 330 in relation to the spring end 310 while the spherical housing 302 slides therebetween. A diamagnetic material may be included in one or more of the self-propelled device 300, spring end 310, and/or the external accessory device 330 for stable magnetic levitation. Thus, without the use of guiderails or a magnetic track, the self-propelled device 300 may maneuver in any direction with the external accessory device 330 remaining in a substantially constant position along a vertical axis of the self-propelled device.

The external accessory device 330 may be in the form of any shape and may comprise any suitable material. A contact surface 334 of the external accessory device 330, or a surface closest to the outer surface of the spherical housing 302 (during magnetic interaction), may correspond to the outer surface of the spherical housing 304. Both the spherical housing 302 of the self-propelled device 300 and the external accessory device 330, namely the contact surface 334, may have substantially equivalent radii of curvature. This radius may be on the order of 10 cm to 30 cm. However, the radius may one meter up to the size of a human transportation vehicle and beyond. As such, magnetic coupling or interaction may be achieved using powerful electromagnets disposed within the self-propelled device 300 to couple with the external accessory device 330, which may perform actions, carry payload, include a novel design, represent a character or figure, etc.

The contact surface 334 of the external accessory device 330 may be formed or coated with a substantially frictionless material, such as a synthetic compound or suitable polymer. Other suitable compounds may include polytetrafluoroethylene (PTFE), polyoxymethylene (POM), ultra-repellant surfaces, and/or liquid-impregnated surfaces and materials, such as slippery liquid infused porous surface (SLIPS). Further examples of substantially frictionless surfaces or coatings may include "ceramic alloys," or "cermets," which may be created by combining a metal alloy with a ceramic compound. A metal/ceramic alloy comprised of boron, aluminum, and magnesium (AlMgB₁₄) may be combined with the cermetic compound of titanium diboride (TiB₂) to provide a near-frictionless coating for the contact surface 334 of the external accessory device 330.

The outer surface of the spherical housing 302 may comprise of any of the above substantially frictionless coatings or compounds discussed with respect to the contact surface 334 of the external accessory device 330. Any combination of substantially frictionless coatings or compounds may be incorporated with respect to the outer surface of the spherical housing 302 and the contact surface 334 of the external accessory device 330.

The spherical housing 302 may be formed to include an inner surface 304 more conducive to providing added friction using, for example, a rubber compound or other suitable synthetic compound, such as a silicone. The spherical housing 302 may include an outer surface having near-frictionless properties using coatings or compounds, as discussed above.

When the self-propelled device 300 moves, the external accessory device 330 may remain magnetically coupled to the spring end 310 at a substantially constant position on top of the self-propelled device 300. As such, while the self-propelled device 300 is being maneuvered, the biasing mechanism 315 may have a variable tilt angle relative to the plane of motion that remains somewhat minimal, but in most cases, does not typically exceed 45°, except during periods of relatively extreme acceleration or deceleration. However, during continuous and stable maneuvering of the self-propelled device 300, the tilt of the biasing mechanism 315 may be closer to naught, or within 10°. During maneuvering, the azimuth may vary at any angle depending on independent power transferred from the motors 322, 344 to the wheels 318,320.

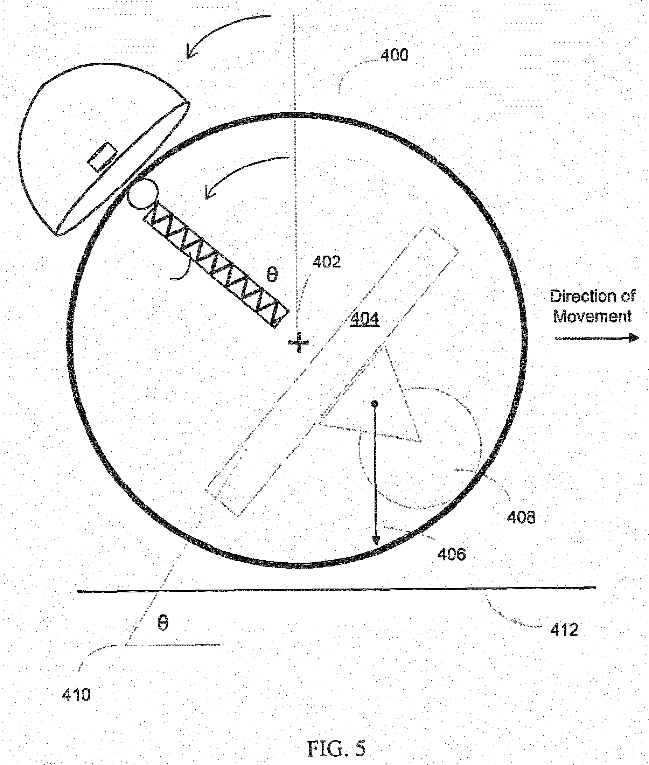

FIG. 5 illustrates an example conventional technique for causing motion of a self-propelled spherical device 400. The self-propelled device 400 may have a sensor platform 404, center of rotation 402 and center of mass 406 and contact a planar surface 412. The drive mechanism for the device 400 may comprises two independently-controlled wheeled actuators 408 in contact with the inner surface of the spherical housing of the device 400.

To achieve continuous motion at a constant velocity, the displacement of the center of mass 406 relative to center of rotation 402 may be maintained by action of wheeled actuators 408. The displacement of the center of mass 406 relative to center of rotation 402 may be difficult to measure. Thus, it may be difficult to obtain feedback for a closed-loop controller to maintain constant velocity. However, the displacement may be proportional to the tilt angle 410 between the sensor platform 404 and the planar surface 412. The tilt angle 410 may be sensed or estimated from a variety of sensor inputs. Therefore, the speed controller for the device 400 may be implemented to use the tilt angle 410 to regulate speed for the wheeled actuators 408 and maintain a constant speed across the planar surface 412. The speed controller may determine the desired angle 410 to produce the desired speed and the desired angle set-point may be an input to a closed loop controller regulating the drive mechanism. This speed control technique may be extended to control turns and rotations of the spherical device 400 with feedback of appropriate sensed angles and angular rates.

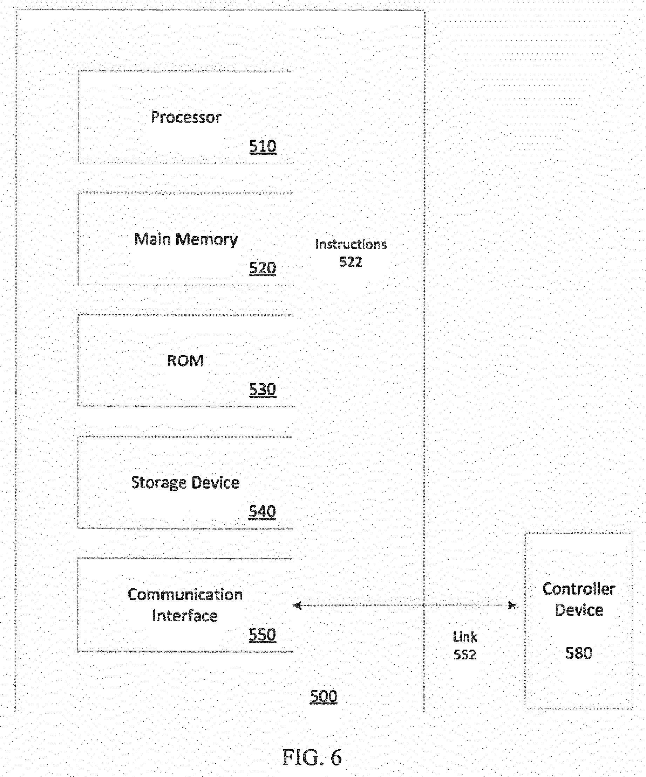

FIG. 6 schematically shows a computer system upon which the above examples may be implemented. One or more components discussed with respect to the system 100 of FIG. 2 may be performed by the system 500 of FIG. 6. The system 100 may also be implemented using a combination of multiple computer systems. The computer system 500 may include processing resources 510, a main memory 520, read only memory (ROM) 530, a storage device 540, and a communication interface 550. The computer system 500 may include at least one processor 510 and a main memory 520, such as a random access memory (RAM) or other dynamic storage device with instructions 522 to be executed by the processor 510. The main memory 520 also may store temporary variables or other intermediate information during execution of instructions executed by the processor 510. The computer system 500 may also include a read only memory (ROM) 530 or other static storage device for storing static information and instructions for the processor 510. A storage device 540, such as a magnetic disk or optical disk, may store information and instructions. For example, the storage device 540 may correspond to a computer-readable medium that triggers logic for maneuvering the self-propelled device 100, 200, 300, 400.

The communication interface 550 may enable the computer system 500 to communicate with a controller device 580 via an established network link 552 (wireless and/or hardwire). Using the network link 552, the computer system 500 may receive command instructions for maneuvering the self-propelled device 100, 200,300,400.

The computer system 500 may implement the techniques described herein. Those techniques may be performed by the computer system 500 in response to the processor 510 executing one or more sequences of one or more instructions contained in the main memory 520. Such instructions may be read into the main memory 520 from another machine-readable medium, such as the storage device 540. Execution of the instructions contained in the main memory 520 may cause the processor 510 to perform the process steps described herein. Hard-wired circuitry may be used in place of, or in combination with, software instructions to implement examples described herein. Thus, the examples described are not limited to any specific combination of hardware circuitry and software.

The spherical shape of this concept may transform the way autonomous or any vehicles move. The spherical, shape may positively contribute to the safety, maneuverability, and comfort to match the demands of autonomous and any mobility. The multi-orientation tires may move in all directions, contributing to safety and comfort for passengers, as well as coping with any space limitations. Active anti-sliding technology may allow the tire to move as needed to reduce sliding from potential hazards, such as black ice or sudden obstacles.

The spherical shape may provide a smooth ride to address passenger comfort. The spherical shape may create a fluid, lateral movement to help the car overtake any obstacles without changing its driving direction. Further, because 360 degree turns are possible with the spherical shape, anticipated parking constrictions may be overcome, as less space is needed for cars fitted with spherical tires to pull into parking spots. Assuming public parking areas play the same role in the future, this could significantly increase the capacity of public parking areas without increasing their overall size.

A spherical tire/drive apparatus in accordance with the present invention may rely on magnetic levitation to carry the load of a vehicle. Such a spherical tire may be suspended from the vehicle by magnetic fields similar to magnetic levitation trains, which result in increased comfort and reduced noise for users. Such an apparatus may allow total integration of moving parts into the body of the spherical tire and/or the body of the vehicle (e.g., no moving parts or critical surfaces exposed to the environment). Further, a recharging system, through magnetic induction, may be totally isolated from the external environment.

The apparatus may simplify manufacturing and assembly as well as eliminate some components entirely, such as rims, steering system, axles, shock absorbers, springs, etc., thereby also reducing weight and cost. The magnetic levitation and control may eliminate all direct contact between the vehicle and the road thereby mitigating vibration, noise, and other undesired effects of direct contact.

The spherical tire may have several spherical tread layers, which may or may not mimic the functionality of conventional tire treads. The structure interior to the spherical tread may be an auxetic or normal foam material which is strong enough to take the load of the vehicle, but flexible enough to allow the tread to deform and generate an appropriate contact patch with the road.

A magnetic material layer and/or a diamagnetic layer may be located interior to the spherical tread structure for providing the levitation and control between tires and the vehicle. The vehicle may be permanently levitated away from the spherical tires or the alternate levitation, so that the vehicle/tires expend no energy when the vehicle is at rest and unused. Diamagnetic materials may generate a magnetic field only if they themselves are brought into an active magnetic field.

One part or all of the energy for the magnetic fields may come from a battery inside the spherical tire or a battery in the vehicle. The battery in the spherical tire may be charged and recharged by inductive transfer from a battery in the vehicle.

An electric motor inside the spherical tire may provide the tire and the vehicle mobility, similar to that described above. Alternatively, magnetic pulses may emote the tire and vehicle. The load bearing portion of the spherical tire may be constructed of graphene layers or layers of carbon-fiber.

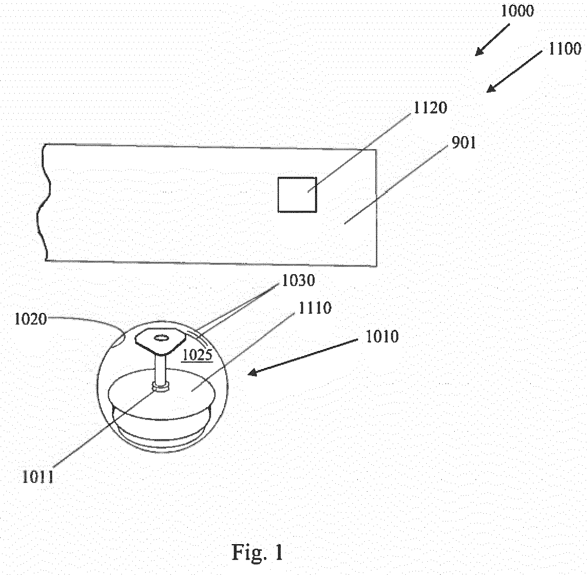

As shown in FIG. 1, a support assembly 1000 for a vehicle 901 in accordance with the present invention may include at least two spherical tires 1010, a drive system 1100 emoting the tires 1010 such that the vehicle 901 may be transported along a road surface. The vehicle 901 may be a car, golf cart, motorcycle, military transport, etc. The drive system 1100 magnetically levitates the vehicle 901 a first predetermined distance from the tires 1010 and magnetically maintains the drive system 1100 at a constant orientation relative to the road surface. A first part 1110 of the drive system 1100 may magnetically levitate itself a second predetermined distance from an inner surface 1020 of the tires 1010 such that the part 1110 is entirely enclosed within an interior space 1025 of each tire 1010. Another part 1120 of the drive system 1100 may magnetically levitate20 the vehicle 901 the first predetermined distance from the tires 1010. Either part 1110 or 1120 of the drive system 1100 may be a magnetically passive component that responds to variations of a magnetic field. A corresponding other part 1120 or 1110 of the drive system 1100 may be a magnetically active component that generates variations in the magnetic field. Either component 1110, 1120 may itself generate a constant magnetic field.

The spherical tires 1010 may include several spherical layers 1030. Some of the layers 1030 may function similarly to layers of a conventional pneumatic tire, such as the tread, the belts, the overlay, the carcass, etc. At least one of the layers 1035 may include a material responsive to a magnetic field variations such that each of the tires 1010 may be controllably rotated about a spherical center 1011 of the tires relative to the vehicle 901, the drive system 1100, and the road surface.

It is contemplated for examples described herein to extend to individual elements and concepts described herein, independently of other concepts, ideas or system, as well as for examples to include combinations of elements recited anywhere in this application. Although examples are described in detail herein with reference to the accompanying drawings, it is to be understood that this disclosure is not limited to those precise examples. As such, many modifications and variations will be apparent to practitioners skilled in this art.

Accordingly, it is intended that the scope of this disclosure be defined by the following claims and their equivalents. Furthermore, it is contemplated that a particular feature described either individually or as part of an example may be combined with other individually described features, or parts of other examples, even if the other features and examples make no mentioned of the particular feature. Thus, the absence of describing combinations does not preclude rights to such combinations.

## Claims

1. A support assembly for a vehicle (901), the assembly (1000) comprising:
at least two spherical tires (1010) for travelling on a road surface and configured for rotating relative to the road surface and the vehicle (901); and
a drive system (1100) configured for magnetically driving rotation of the spherical tires (1010) relative to the drive system (1100) itself such that no portion of the drive system (1100) physically contacts the spherical tires (1010) or the road surface.

2. The support assembly as set forth in claim 1 wherein the drive system (1100) is configured for magnetically levitating the vehicle (901) a first predetermined distance from the tires (1010).

3. The support assembly as set forth in claim 1 or 2 wherein the drive system (1100) is configured for magnetically levitating itself a second predetermined distance from an inner surface of the tires (1010).

4. The support assembly as set forth in at least one of the previous claims wherein the tires (1010) are configured as closed spheres having an interior space (1025) completely separate from external environment.

5. The support assembly as set forth in at least one of the previous claims wherein the drive system (1100) comprises a first magnetically passive part and a second magnetically active part.

6. The support assembly as set forth in claim 5 wherein the first part generates only a constant magnetic field.

7. The support assembly as set forth in claim 5 or 6 wherein the second part generates a constant magnetic field and a variable magnetic field.

8. The support assembly as set forth in at least one of the previous claims wherein the drive system (1100) is configured to maintain the vehicle (901) at a substantially constant orientation relative to the drive system (1100).

9. The support assembly as set forth in at least one of the previous claims wherein the tires (1010) include a plurality of layers.

10. The support assembly as set forth in claim 9 wherein one of the plurality of layers mechanically supports a portion of a load determined by the vehicle.

11. The support assembly as set forth in claim 10 wherein one of the plurality of layers comprises a tread for generating traction between the tires (1010) and the road surface.

12. The support assembly as set forth in claim 10 or 11 wherein one of the plurality of layers comprises an elastomeric layer for damping vibration caused by the tires (1010) traveling over the road surface.
